(19) **Europäisches Patentamt**
**European Patent Office**
**Office européen des brevets**

(11) **EP 1 546 762 B1**

(12) **FASCICULE DE BREVET EUROPEEN**

(45) Date de publication et mention
de la délivrance du brevet:
**25.01.2012 Bulletin 2012/04**

(51) Int Cl.:
*G01V 1/047* *(2006.01)*    *G01V 1/053* *(2006.01)*

(21) Numéro de dépôt: **03798219.6**

(86) Numéro de dépôt international:
**PCT/FR2003/002800**

(22) Date de dépôt: **24.09.2003**

(87) Numéro de publication internationale:
**WO 2004/029661 (08.04.2004 Gazette 2004/15)**

(54) **DISPOSITIF D EMISSION SISMIQUE DANS UNE FORMATION SOUTERRAIN    E ET METHODE POUR SA MISE EN OEUVRE**

EINRICHTUNG ZUR SEISMISCHEN EMISSION IN EINER UNTERIRDISCHEN FORMATION UND VERFAHREN ZU IHRER IMPLEMENTIERUNG

DEVICE FOR SEISMIC EMISSION IN AN UNDERGROUND FORMATION AND METHOD OF IMPLEMENTING SAME

(84) Etats contractants désignés:
**AT BE BG CH CY CZ DE DK EE ES FI FR GB GR HU IE IT LI LU MC NL PT RO SE SI SK TR**

(30) Priorité: **26.09.2002 FR 0211945**

(43) Date de publication de la demande:
**29.06.2005 Bulletin 2005/26**

(73) Titulaires:
- **Institut Français du Pétrole**
  **92852 Rueil-Malmaison Cedex (FR)**
- **GDF SUEZ**
  **75392 Paris Cedex 08 (FR)**
- **CGGVERITAS SERVICES SA**
  **91341 Massy Cedex (FR)**

(72) Inventeurs:
- **MEYNIER, Patrick**
  **F-78400 Chatou (FR)**
- **HUGUET, Frédéric**
  **F-95470 Fosses (FR)**
- **MEUNIER, Julien**
  **F-75013 Paris (FR)**

(56) Documents cités:
WO-A1-02/50572    FR-A- 2 766 929
GB-A- 2 185 574    US-A- 5 360 951
US-A- 5 724 311

## Description

La présente invention concerne un dispositif d'émission sismique dans une formation souterraine et méthode pour sa mise en oeuvre.

Un tel dispositif d'émission trouve des applications notamment dans le cadre d'opérations sismiques où l'on forme des images sismiques d'une formation souterraine à explorer à partir d'ondes élastiques captées par des récepteurs sismiques appropriés, ces ondes étant renvoyées par les discontinuités du sous-sol en réponse à des ondes émises par une source telle qu'un vibrateur électromécanique.

Le système selon l'invention est plus particulièrement utile dans le cadre d'opérations de surveillance à long terme d'un gisement souterrain en cours d'exploitation, (un réservoir de stockage de fluides par exemple ou un gisement pétrolier) dites de sismique répétitive, où l'on compare des images sismiques du sous-sol obtenues à intervalles réguliers de façon à déceler les modifications qui ont pu s'y produire dues à l'exploitation. Il s'agit d'opérations de longue durée car les variations à observer sont relativement lentes.

Etat de la technique

La reconnaissance sismique d'un gisement souterrain s'opère d'une façon générale en couplant avec le sous-sol des sources sismiques et des récepteurs, suivant différentes combinaisons où les sources et/ou les récepteurs sont disposés à la surface ou à son voisinage ou dans un ou plusieurs puits au travers de la formation explorée. On réalise des séries de cycles d'émission réception sismique en changeant à chaque fois l'emplacement de la source sismique par rapport à l'axe du puits où les ensembles de récepteurs sont installés, suivant une technique dite de "walk-away", et en enregistrant les arrivées aux récepteurs R1 à Rn en fonction du temps de propagation t.

Les sources sismiques utilisées sont le plus souvent des vibrateurs électromécaniques : électro-hydrauliques, piézoélectriques, etc. Des vibrateurs de type piézoélectrique sont décrits par exemple dans le brevet US 5 360 951.

La surveillance de l'évolution des gisements nécessite généralement des opérations sismiques de surveillance espacées dans le temps. Dans la pratique, il faut réinstaller l'équipement sismique de surface à chaque nouvelle séance d'enregistrement sismique, et, de préférence, reproduire les conditions d'émission des opérations sismiques précédentes.

Une méthode connue de surveillance d'un gisement d'hydrocarbures ou d'un réservoir souterrain de fluide comporte l'utilisation d'un système de surveillance comprenant des antennes de réception formées par interconnexion de récepteurs sismiques, installées à demeure respectivement dans des trous de faible profondeur, avec des moyens de connexion sur lesquels peuvent se brancher des câbles de connexion à un laboratoire sismique, et un camion vibrateur que l'on déplace sur le terrain.

L'utilisation d'une source mobile telle qu'un vibrateur présente des inconvénients surtout dans le cadre d'une surveillance périodique d'un réservoir de stockage souterrain. Avec une source déplaçable, on ne peut assurer une reproductibilité suffisante dans le temps et dans l'espace des ondes sismiques émises. Il est très difficile de positionner la source exactement aux mêmes endroits que celles qu'elle occupait lors des cycles précédents d'émission réception précédents, et, dans l'hypothèse où ce lieu serait exactement le même, d'obtenir que son coefficient de couplage avec le sol y soit tout à fait le même.

Par le brevet EPO 748 457, on connaît également une méthode et un dispositif de surveillance sismique permanente d'une formation souterraine Dans le cadre d'opérations de surveillance régulière à long terme d'une zone souterraine, on installe un dispositif d'émission réception sismique à poste fixe sur le site d'exploitation, de façon à retrouver d'une fois sur l'autre des conditions opératoires stables : emplacements identiques d'émission réception, qualité de couplage identique avec les terrains etc. Le dispositif comporte une pluralité de sources sismiques (des vibrateurs électromécaniques par exemple) à des emplacements fixes en surface ou bien enterrées à faible profondeur, que l'on alimente et on déclenche par une station centrale de commande et d'enregistrement. Les sources sismiques et le réseau de liaison peuvent être enterrés ou bien encore installés de façon permanente en surface, et associée à au moins un ensemble de récepteurs qui est couplé en permanence avec le sol en surface ou bien avec la paroi d'au moins un puits traversant la zone souterraine. Grâce à cet ensemble de sources à poste fixe dont le couplage avec les terrains environnant reste stable, et à ce réseau d'alimentation au moins en partie enterré dont l'aire d'emprise en surface est réduite, on peut mener toute une série d'opérations sismiques de surveillance dans des conditions opératoires stables, sans risque d'incompatibilité avec les activités du chantier d'exploitation.

Par le brevet EP 07 48 457, on connaît un autre dispositif de surveillance sismique permanente d'une formation souterraine au moyen d'un ou plusieurs ensembles d'émission réception sismique comportant chacun une source telle qu'un vibrateur et une antenne réceptrice formée d'une pluralité des récepteurs d'ondes élastiques tels que des géophones et/ou des hydrophones descendus dans un puits et couplés avec la formation. La source sismique peut être disposée à la surface sur un bloc de béton solidaire du sol. De préférence, on la fixe à une dalle dans une cavité voisine du puits ou formée par élargissement de la section du puits dans sa partie supérieure de façon à diminuer les perturbations dues aux variations hydrométriques du sol. Les récepteurs et la source sont reliés à une station extérieure de commande et d'acquisition de signaux. Les opérations de mise en place de ces ensembles sont relativement simples et la zone d'emprise au sol des différents puits est réduite ce qui facilite leur intégration sur des chantiers d'exploitation de gisements.

Grâce à cet ensemble de sources à poste fixe facilement intégrables sur les chantiers d'exploitation de gisements ou de stockage de fluides et dont la qualité de couplage avec les terrains environnant est connue et stable, on peut mener toute une série d'opérations sismiques de surveillance dans des conditions opératoires similaires. Les jeux de traces sismiques peuvent être utilement comparés et leurs différences sont bien significatives des changements survenus dans les formations.

Le brevet WO 02/50572 devoile un dispositif d'emission d'ondes conformement au préambule de la revendication 1.

Les vibrateurs évoqués ci-dessus sont couplé avec les terrains par une surface limitée ce qui présente de notables inconvénients. Le diagramme de rayonnement favorise en effet la formation d'ondes de surface et de type S se propageant à l'horizontale, qui perturbent les enregistrements et compliquent leur traitement. De plus, leur rendement en ondes de compression est relativement faible, et, comme leur profondeur d'enfouissement est relativement faible, on ne peut pas s'affranchir complètement avec elles des variations des caractéristiques pétroélastiques de la zone altérée dues aux conditions météorologiques.

**Le dispositif et la méthode selon l'invention**

Le dispositif selon l'invention conformement à la revendication 1, est adapté à émettre des ondes dans une formation souterraine.

Chaque vibrateur peut comporter des barres d'ancrage associées à au moins un des pavillons pour accroître le couplage du vibrateur avec la masse de matériau de couplage.

Suivant un mode de réalisation, chaque pavillon comporte au moins deux plaques disposées à distance l'une de l'autre et réunies par les barres d'ancrage.

De préférence, la surface externe de chaque plaque et celle des barres d'ancrage sont pourvues d'inégalités de relief (surface cannelée) pour accroître la surface de couplage du dispositif avec le matériau de couplage.

Les pavillons peuvent être perforés de façon à faciliter la pénétration du matériau de couplage dans l'espace compris entre les pavillons.

On peut utiliser par exemple un seul matériau d'enrobage qui est réparti de façon à assurer le couplage avec la formation, au moins au niveau des extrémités opposées du vibrateur. On peut aussi utiliser au moins deux matériaux de couplage différents, un premier matériau étant réparti suivant deux masses distinctes pour assurer le couplage du vibrateur avec la formation, au niveau de ses extrémités opposés, et un deuxième matériau étant intercalé entre les deux masses.

Avec ses pavillons étroitement en contact avec le matériau de couplage à la formation, le rendement énergétique du vibrateur est amélioré et l'émission des ondes S très atténuée par le mouvement en sens opposé des deux plaques.

Suivant un mode de mise en oeuvre préféré, le dispositif comporte plusieurs vibrateurs connectés à un générateur de signaux, ces vibrateurs étant disposés à intervalles les uns des autres le long d'un puits et tous noyés dans au moins un matériau de couplage. Un boîtier de contrôle peut être intercalé entre les vibrateurs et le générateur de signaux ce qui permet de les déclencher successivement, de façon à obtenir une émission orientée principalement suivant un diagramme défini.

Pour permettre ce déclenchement des vibrateurs en séquence, le dispositif comporte par .exemple un récepteur sismique couplé avec les formations environnant le puits à une profondeur déterminée qui est connecté avec un ensemble d'acquisition et de traitement, adapté à commander en séquence les vibrateurs.

Il peut également comporter des récepteurs sismiques associés aux différents vibrateurs (ils sont par exemple fixés à des supports solidaires des barres d'ancrage) et connectés à l'ensemble d'acquisition et de traitement qui est adapté à déterminer les temps de trajet des ondes entre les emplacements des différents vibrateurs et à les commander en séquence.

Les éléments moteurs peuvent être d'un type quelconque : électromécanique, électromagnétique, hydraulique, etc. Suivant un mode préféré de réalisation, chaque vibrateur comporte un pilier d'éléments sensibles (constitué par exemple d'éléments sensibles piézoélectriques ou magnétostrictifs) enrobé dans une gaine de protection, le matériau de couplage étant au contact avec la gaine de protection et avec les deux plaques terminales sur une partie au moins de chacune de leurs faces respectives. L'espace entre la gaine et le pilier d'éléments sensibles peut être rempli d'un liquide tel que de l'huile.

La méthode selon l'invention conformement à la revendication 18, permet de générer dans une formation souterraine des signaux vibratoires suivant un diagramme d'émission orienté.

Le pilotage en séquence des vibrateurs comporte par exemple l'application aux vibrateurs de signaux de commande à fréquence fixe f dont la phase $\Phi_i$ est reliée à la fréquence f et au décalage de temps par la relation $\Phi_i = 2\pi.f.t_i$.

Il est possible également de piloter en séquence les vibrateurs en leur appliquant des signaux de commande de fréquences fixes distinctes les unes des autres de façon à permettre leur séparation.

Suivant un mode de mise en oeuvre, la méthode comporte le couplage avec la formation environnant le puits d'un récepteur sismique et la détermination au préalable des temps de trajet des ondes respectivement entre chaque vibrateur et le dit récepteur.

Suivant un autre mode de mise en oeuvre, la méthode comporte l'adjonction aux vibrateurs, de récepteurs connectés à un ensemble d'acquisition et de traitement de signaux et le déclenchement en séquence des différents vibrateurs avec des décalages entre les instants respectifs de déclenchement calculés par le dit ensemble en corrélant les signaux produits par les différents récepteurs.

## Présentation sommaire des figures

Les caractéristiques et avantages du dispositif et de la méthode selon l'invention, apparaîtront plus clairement à la lecture de la description ci-après d'un exemple non limitatif de réalisation, en se référant aux dessins annexés où :

la fig.1 montre schématiquement un vibrateur enfoui dans du matériau de couplage tel que du ciment ou analogue ;

- la fig.1a montre une plaque terminale de chaque vibrateur avec les barres d'ancrage réparties sur son pourtour ;

- la fig.2a montre schématiquement un mode de couplage de chaque vibrateur où les pavillons d'extrémité sont séparément couplés aux terrains environnant par un même matériau de couplage;

- les fig.2b et 2c montrent respectivement des cavités aménagées dans le puits au niveau de chaque pavillon, et un mode particulier permettant de créer chacune de ces cavités ;

- la fig.3 montre schématiquement un agencement de plusieurs vibrateurs enfouis à des profondeurs différentes d'un puits, connectés à un système de pilotage en surface, permettant leur commande séquentielle avec des décalages de temps tenant compte de la vitesse réelle des ondes dans les formations environnant le puits ;

- la fig.4 montre schématiquement un vibrateur avec un géophone associé, permettant un autre mode de commande séquentielle de vibrateurs dans un puits ; et

- la fig.5 montre schématiquement un mode de réalisation du dispositif où chaque pavillon comporte deux plaques disposées parallèlement.

## Description détaillée

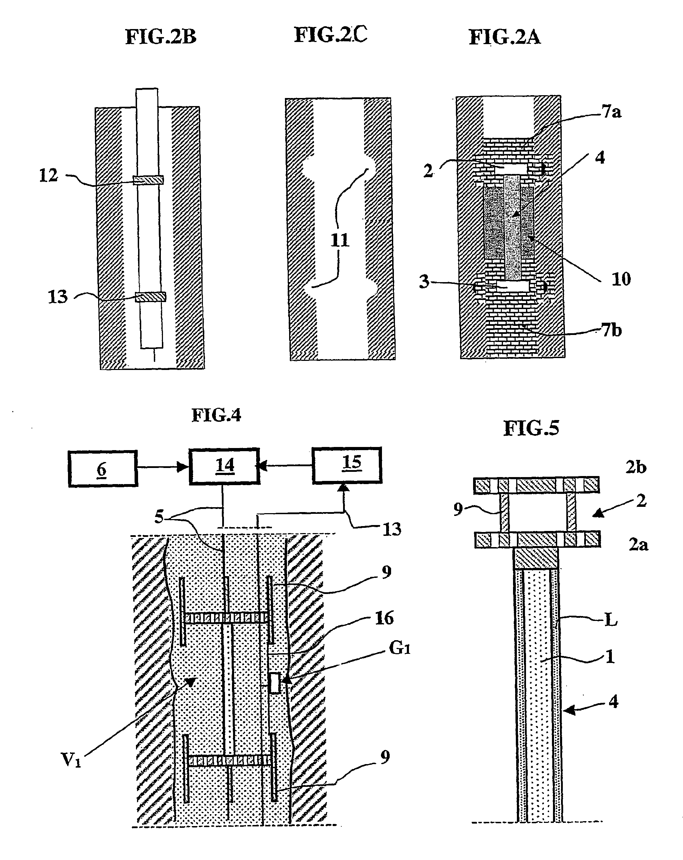

Le dispositif selon l'invention comporte au moins un (et de préférence plusieurs) vibrateurs V. Les vibrateurs peuvent être d'un type quelconque : électromécaniques, électromagnétiques, hydrauliques, etc.
Dans la description qui suit, on va considérer à titre d'exemple, le cas de vibrateurs comprenant au moins un pilier d'éléments sensibles (piézoélectriques ou magnétostrictifs) 1 associé rigidement à chacune de ses extrémités opposées à un pavillon 2, 3 ou plaque. Le pilier d'éléments sensibles est centré par rapport aux pavillons 2, 3 et recouvert par une membrane déformable 4. Un câble de connexion 5 relie le pilier 1 à un générateur 6 de signaux de commande.
Le vibrateur V est placé dans une cavité ou puits W et un matériau de couplage 7 tel que du ciment ou du béton par exemple, est injecté dans le puits de façon qu'il soit en contact intime avec le pilier 1 sur toute sa longueur et également avec les faces opposées de chacun des pavillons 2, 3. Pour permettre au matériau de couplage 7 de se répartir de manière bien homogène à l'intérieur de l'espace entre les pavillons, ceux-ci peuvent être pourvus de perforations 8. Le diamètre des pavillons 2, 3 doit correspondre sensiblement au diamètre de la cavité ou du puits W de manière à obtenir une surface maximum de couplage.
Pour améliorer encore le couplage et répartir les contraintes dans un volume important du matériau de couplage 7, des tiges d'ancrage 9 de longueur appropriée peuvent être fixées à la périphérie des pavillons 2, 3.
Suivant le mode de réalisation de la fig. 5, chaque pavillon 2, 3 comporte comme celui représenté, au moins deux plaques 2a, 2b disposées parallèlement reliées l'une à l'autre par des tiges d'ancrage 9. Pour améliorer le couplage avec le matériau de couplage 7, la surface externe de chaque plaque 2a, 2b et aussi des tiges de couplage 9 est de préférence pourvue d'inégalités de relief, telles que des cannelures. L'espace entre la membrane tubulaire déformable 4 et le pilier d'éléments sensibles 1 peut comme représenté être rempli d'un liquide L tel que de l'huile.
Le ciment utilisé pour le couplage doit sécher sans se rétracter de manière à garantir un bon couplage.
Au lieu de noyer le vibrateur entièrement dans un même volume 7 de matériau de couplage, il est possible aussi comme illustré à la fig.2a, de coupler chacun des pavillons séparément avec les terrains environnants, par l'intermédiaire de deux volumes 7a, 7b de ce même matériau. Pour isoler l'un de l'autre les deux volumes 7a, 7b, on coule entre eux un autre matériau 10. On peut utiliser par exemple de la bentonite ou analogue qui a la propriété de gonfler une fois mouillée et ainsi peut combler l'espace intermédiaire. Cette solution est utile par exemple quand le matériau de couplage a des propriétés mécaniques différentes de celles de l'encaissant (terrains environnants).
Suivant une variante de mise en oeuvre, le couplage du vibrateur avec les formations peut être amélioré si on aménage une chambre 11 dans la paroi du puits au niveau de chaque pavillon comme indiqué fig.2b. Pour créer un tel chambrage, on peut utiliser par exemple des outils de forage appropriés ou encore des substances explosives. Une solution consiste par exemple (fig.2c) à descendre dans le puits à l'endroit prévu d'enfouissement du vibrateur, une tige 12 portant deux enroulements 13 de cordeau détonant suffisamment espacés l'un de l'autre, que l'on fait détoner.

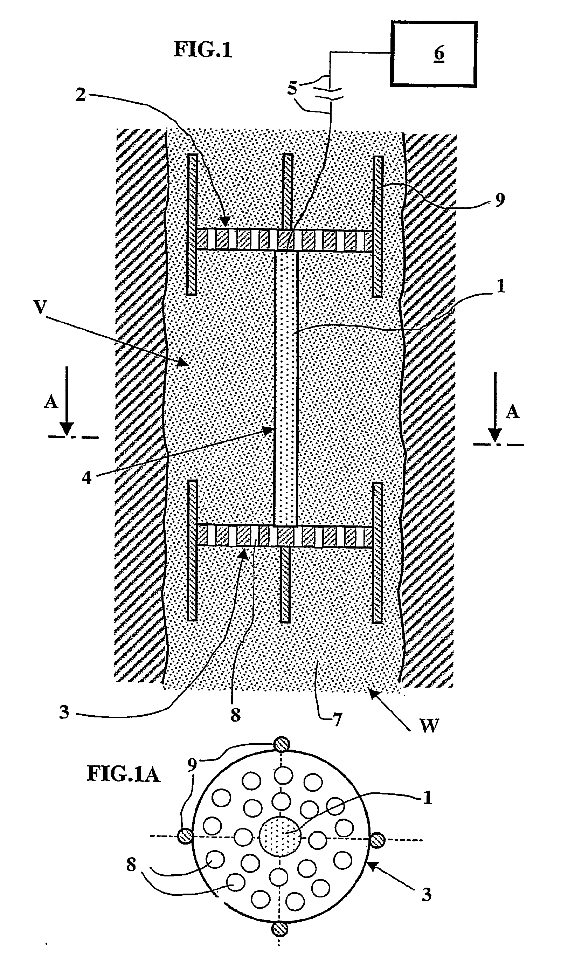

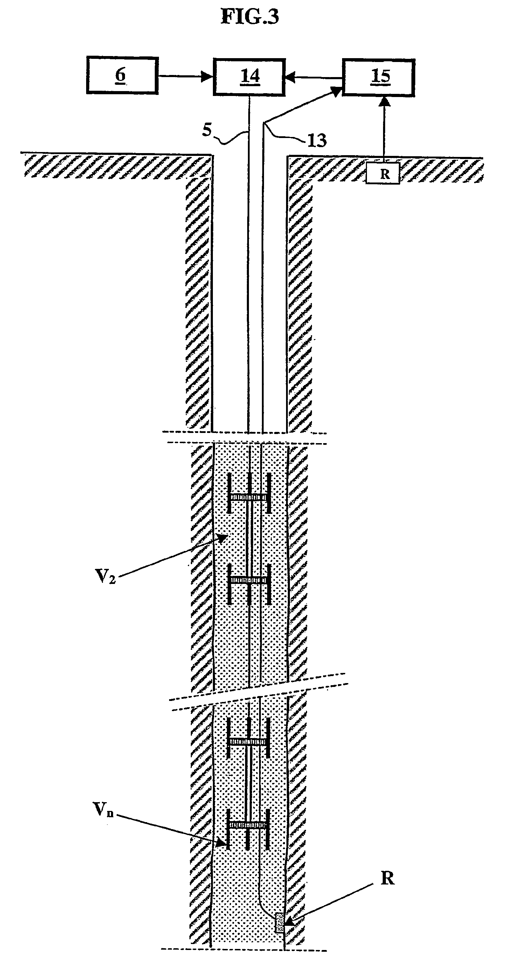

Suivant le mode de mise en oeuvre de la fig.3, le dispositif comporte plusieurs vibrateurs V1, V2, ..., Vn analogues à celui de la fig.1 ou 5, qui sont placés à intervalles les uns des autres le long d'un puits W. Les vibrateurs sont de même noyés dans un ou plusieurs matériau(x) de couplage 7, 10 (fig.1 ou fig.2a).

Avec un tel agencement, en connectant les différents vibrateurs V1 à Vn au générateur 6 par l'intermédiaire d'un boîtier de commande 14 et en les actionnant en séquence avec des décalages de temps choisis entre eux, on peut obtenir un effet de directivité.

On amplifie ainsi les signaux vibratoires émis plutôt vers le bas au détriment de ceux qui se propagent dans d'autres directions. De ce fait, on diminue notamment l'amplitude du premier multiple réfléchi par la surface de la formation, qui présente une instabilité nuisible à la répétabilité du signal.

Pour déterminer les instants de déclenchement, on procède par exemple de la manière suivante.

On utilise un récepteur sismique R (hydrophone, géophone ou de préférence une combinaison de ces deux capteurs) disposé de préférence sensiblement à la verticale du puits contenant les vibrateurs ou bien à une distance horizontale suffisamment faible pour que les temps de trajets entre chaque vibrateur et ce récepteur R ne diffèrent pas sensiblement des temps de trajet verticaux. Le récepteur peut être positionné dans le puits contenant les vibrateurs et il est relié à un ensemble d'acquisition et de traitement 15 disposé par exemple en surface. Si plusieurs récepteurs sont positionnés le long du puits sous les vibrateurs, on choisira par exemple le plus profond d'entre eux. On peut utiliser aussi un récepteur en surface. On mesure au préalable le temps de trajet $\vartheta_i$ des ondes entre chaque vibrateur Vi et ce récepteur R. Les décalages de temps ti (i=1 à n) à appliquer aux différents vibrateurs Vi se déduisent de ces temps de trajet par la relation :

$$t_i = K + \varepsilon.\vartheta_i$$

où K est une constante et $\varepsilon$ est égal à +1 ou -1 suivant que le récepteur R est situé au-dessus ou au -dessous de l'ensemble des vibrateurs. L'ensemble 15 commande l'application de ces décalages de temps aux vibrateurs par l'intermédiaire du boîtier de commande 14.

Dans le cadre d'une utilisation où les vibrateurs émettent chacun une mono-fréquence comme décrit dans le brevet EP 1173781 des demandeurs le décalage apparaîtra sous la forme d'un déphasage par fréquence relié au décalage en temps précédent par la relation : $\phi i = 2\pi f\, ti$.

Suivant le mode de mise en oeuvre de la fig.4, il est également possible de contrôler le déclenchement en séquence des vibrateurs placés dans le puits, en associant à chacun d'eux, un récepteur sismique tel qu'un géophone G1. Chaque géophone est par exemple fixé à un support 16 disposé entre deux barres d'ancrage 9. Les géophones sont connectés respectivement à l'ensemble d'acquisition et de traitement 15 extérieur au puits. Pour ajuster en temps réel le retard au déclenchement d'un vibrateur Vi quelconque par rapport au premier de la série, on mesure le temps effectif de parcours des ondes entre eux par toute méthode de mesure de décalage entre signaux, notamment en réalisant une intercorrélation entre les signaux délivrés respectivement par les géophones soit dans le domaine temporel ou dans le domaine des fréquences et l'on déclenche le vibrateur Vi en tenant compte de ce temps de parcours effectif. Cette mesure du décalage temporel peut être réalisée par intercorrélation. Les décalages calculés par l'ensemble de traitement 15 sont transmis au boîtier de commande 14 qui retarde en conséquence les différents vibrateurs par rapport au premier d'entre eux.

On a décrit des vibrateurs comprenant un seul pilier central 1. On ne sortirait pas cependant du cadre de l'invention en intercalant plusieurs piliers d'éléments sensibles piézoélectriques entre les deux pavillons 2, 3.

## Revendications

1. Dispositif d'émission d'ondes dans une formation souterraine, comportant au moins un vibrateur comprenant deux pavillons (2, 3) et positionné dans un puits ou cavité (w), au moins un élément moteur (1) adapté à engendrer des vibrations et à les communiquer aux dits pavillons et un générateur (6) pour appliquer des signaux de commande périodiques à l'élément moteur, et au moins un matériau solide (7, 10) **caractérisé en ce que** le vibrateur est noyé dans ledit matériau solide (7, 10) assurant son couplage avec la formation souterraine, ce matériau étant au contact avec les deux pavillons (2, 3) sur une partie au moins de chacune de leurs faces respectives.

2. Dispositif selon la revendication 1, **caractérisé en ce qu'**il comporte des barres d'ancrage (9) associées à au moins un pavillon (2, 3), pour accroître le couplage du vibrateur avec la masse (7, 10) de matériau de couplage.

3. Dispositif selon la revendication 1, **caractérisé en ce que** chaque pavillon comporte au moins deux plaques (2a, 2b) disposées à distance l'une de l'autre et réunies par des barres d'ancrage (9).

4. Dispositif selon la revendication 2 ou 3, **caractérisé en ce que** la surface externe de chaque pavillon est pourvu d'inégalités de relief telles que des cannelures pour accroître la surface de couplage du dispositif avec le matériau de couplage (7, 10).

5. Dispositif selon l'une des revendications 2 à 4, **caractérisé en ce que** les barres d'ancrage sont pourvues d'inégalités de relief pour accroître la surface de couplage du dispositif avec le matériau de couplage (7, 10).

6. Dispositif selon la revendication 1 ou 2, **caractérisé en ce que** les pavillons (2, 3) sont perforées de façon à faciliter la pénétration du matériau de couplage dans l'espace compris entre les deux plaques terminales (2, 3).

7. Dispositif selon l'une des revendications précédentes, **caractérisé en ce qu'**il comporte un seul matériau solide de couplage qui est réparti de façon à assurer le couplage du vibrateur avec la formation, au moins au niveau de ses extrémités opposées.

8. Dispositif selon la revendication 7, **caractérisé en ce qu'**il comporte au moins deux matériaux de couplage, un premier matériau (7a, 7b) réparti suivant deux masses distinctes pour assurer le couplage du vibrateur avec la formation, au niveau de ses extrémités opposés, un deuxième matériau (10) étant intercalé entre les deux masses.

9. Dispositif selon l'une des revendications précédentes, **caractérisé en ce que** comporte plusieurs vibrateurs (V1, ... Vn) connectés à un générateur de signaux (6), ces vibrateurs étant disposés à intervalles les uns des autres le long d'un puits (W) et tous noyés dans au moins un matériau de couplage (7, 10).

10. Dispositif selon la revendication 9, **caractérisé en ce qu'**il comporte un boîtier de contrôle (14) intercalé entre les vibrateurs (V1, ... Vn) et le générateur de signaux (6) permettant de les déclencher successivement.

11. Dispositif selon la revendication 9 ou 10, **caractérisé en ce qu'**il comporte un récepteur sismique (R) couplé avec les formations environnant le puits à une profondeur déterminée et connecté avec un ensemble d'acquisition et de traitement (15), adapté à commander en séquence les vibrateurs pour obtenir une émission orientée principalement suivant un diagramme défini.

12. Dispositif selon la revendication 9 ou 10, **caractérisé en ce qu'**il comporte des récepteurs sismiques (G1) associés aux différents vibrateurs (V1) et connectés à un ensemble d'acquisition et de traitement (15) adapté à déterminer les temps de trajet des ondes entre les emplacements des différents vibrateurs et à les commander en séquence pour obtenir une émission orientée principalement suivant un diagramme défini.

13. Dispositif selon la revendication 2 et 12, **caractérisé en ce que** les récepteurs (G1) sont fixés à des supports (16) solidaires des barres d'ancrage (9).

14. Dispositif selon l'une des revendications précédentes, **caractérisé en ce que** chaque vibrateur comporte un pilier (1) d'éléments sensibles enrobé dans une gaine de protection (4) ledit matériau de couplage étant au contact avec la gaine de protection (4) et avec les deux pavillons (2, 3) sur une partie au moins de chacune de leurs faces respectives.

15. Dispositif selon la revendication 14, **caractérisé en ce que** l'espace entre la gaine et le pilier d'éléments sensibles est rempli d'un liquide tel que de l'huile.

16. Dispositif selon la revendication 14, **caractérisé par** en ce que le pilier (1) est constitué d'éléments sensibles piézoélectriques ou magnétostrictifs.

17. Dispositif selon l'une des revendications 1 à 13, **caractérisé par** en ce que chaque élément moteur est de type électromécanique, électromagnétique ou hydraulique.

18. Méthode pour générer dans une formation souterraine des signaux vibratoires suivant un diagramme d'émission orienté, **caractérisé en ce qu'**elle comporte:

    - l'installation dans un même puits (W) de plusieurs vibrateurs (V1, ..., Vn) comprenant chacun deux pavillons (2, 3), au moins un élément moteur (1) adapté à engendrer des vibrations et à les communiquer aux dits pavillons et un générateur (6) pour appliquer des signaux de commande périodiques à l'élément moteur, chaque vibrateur étant positionné dans un puits ou cavité (W) et noyé dans au moins un matériau solide (7, 10) assurant son couplage avec la formation souterraine, ce matériau étant au contact avec les deux pavillons (2, 3) sur une partie au moins de chacune de leurs faces respectives; et
    - le pilotage en séquence des différents vibrateurs (V1, ..., Vn), par l'intermédiaire d'un boîtier de contrôle (10) avec des décalages entre les instants respectifs de déclenchement qui dépendent des intervalles entre les emplacements des vibrateurs et de la vitesse de propagation des ondes dans les formations environnant le puits, de manière à obtenir une émission directive.

19. Méthode selon la revendication 18, **caractérisée en ce que** le pilotage en séquence des vibrateurs comporte l'application aux vibrateurs de signaux de commande à fréquence fixe f dont la phase $\Phi_i$ est reliée à la dite fréquence f et au dit décalage de temps par la relation $\Phi_i = 2\pi.f.t_i$.

20. Méthode selon la revendication 18, **caractérisée en ce que** le pilotage en séquence des vibrateurs comporte l'application aux différents vibrateurs de signaux de commande de fréquences fixes distinctes les unes des autres de façon à permettre leur séparation.

21. Méthode selon l'une des revendications 18 à 20, **caractérisée en ce qu'**elle comporte le couplage avec la formation environnant le puits d'un récepteur sismique (R) et la détermination au préalable des temps de trajet des ondes respectivement entre chaque vibrateur et le dit récepteur (R).

22. Méthode selon l'une des revendications 18 à 20, **caractérisée en ce qu'**elle comporte l'adjonction aux vibrateurs, de récepteurs (R, G1) connectés à un ensemble (15) d'acquisition et de traitement de signaux et le déclenchement en séquence des différents vibrateurs avec des décalages entre les instants respectifs de déclenchement calculés par le dit ensemble (15) en calculant le décalage entre les signaux produits par les différents récepteurs.

## Claims

1. A device for wave emission in an underground formation, comprising at least one vibrator including two slabs (2, 3) and positioned in a well or cavity (W), at least one motive element (1) suited to generate vibrations and to communicate them to said slabs, and a generator (6) for applying periodic control signals to the motive element and at least one solid material (7, 10), **characterized in that** the vibrator is embedded in said solid material (7, 10) providing coupling thereof with the underground formation, this material being in contact with the two slabs (2, 3) over at least part of each of the respective faces thereof.

2. A device as claimed in claim 1, **characterized in that** it comprises anchor bars (9) associated with at least one slab (2, 3) to increase coupling of the vibrator with the mass (7, 10) of coupling material.

3. A device as claimed in claim 1, **characterized in that** each slab comprises at least two plates (2a, 2b) arranged at a distance from one another and connected by anchor bars (9).

4. A device as claimed in claim 2 or 3, **characterized in that** the outer surface of each slab is provided with an uneven relief such as grooves to increase the area of coupling of the device with coupling material (7, 10).

5. A device as claimed in any one of claims 2 to 4, **characterized in that** the anchor bars are provided with an uneven relief to increase the area of coupling of the device with coupling material (7, 10).

6. A device as claimed in claim 1 or 2, **characterized in that** slabs (2, 3) are perforated so as to facilitate penetration of the coupling material in the space contained between the two end plates (2. 3).

7. A device as claimed in any one of the previous claims, **characterized in that** it comprises a single solid coupling material distributed so as to provide coupling of the vibrator with the formation, at least at the opposite ends thereof.

8. A device as claimed in claim 7, **characterized in that** it comprises at least two coupling materials, a first material (7a, 7b) distributed in two distinct masses to provide coupling of the vibrator with the formation, at the opposite ends thereof, and a second material (10) inserted between the two masses.

9. A device as claimed in any one of the previous claims, **characterized in that** it comprises several vibrators (V1...., Vn) connected to a signal generator (6), these vibrators being arranged at intervals in relation to one another along a well (W) and all embedded in at least one coupling material (7, 10).

10. A device as claimed in claim 9, **characterized in that** it comprises a control box (14) inserted between vibrators (V1,..., Vn) and signal generator (6) allowing them to be triggered successively.

11. A device as claimed in any one of claims 9 or 10, **characterized in that** it comprises a seismic receiver (R) coupled with the formations surrounding the well at a determined depth and connected to an acquisition and processing unit (15) suited for sequential control of the vibrators so as to obtain an emission oriented mainly according to a predetermined pattern.

12. A device as claimed in any one of claims 9 or 10, **characterized in that** it comprises seismic receivers (G1) associated with the various vibrators (VI) and connected to an acquisition and processing unit (15) suited to determine the traveltimes of the waves between the locations of the various vibrators and to control them sequentially so as to obtain an emission oriented mainly according to a predetermined pattern.

13. A device as claimed in claims 2 and 12, **character-**

**ized in that** receivers (G1) are fastened to supports (16) secured to anchor bars (9).

14. A device as claimed in any one of the previous claims, **characterized in that** each vibrator comprises a pillar (1) of sensitive elements coated with a protective sheath (4), said coupling material being in contact with protective sheath (4) and with the two slabs (2, 3) over at least part of each of the respective faces thereof.

15. A device as claimed in claim 14, **characterized in that** the space between the sheath and the pillar of sensitive elements is filled with a liquid such as oil.

16. A device as claimed in claim 14, **characterized in that** pillar (1) consists of piezoelectric or magnetostrictive sensitive elements.

17. A device as claimed in any one of claims 1 to 13, **characterized in that** each motive element is of electromechanical, electromagnetic or hydraulic type.

18. A method of generating in an underground formation vibrational signals according to an oriented emission pattern, **characterized in that** it comprises:

- installing in the same well (W) several vibrators (V1,..., Vn) comprising each two slabs (2, 3), at least one motive element (1) suited to generate vibrations and to communicate them to said slabs and a generator (6) for applying periodic control signals to the motive element, each vibrator being positioned in a well or cavity (W) and embedded in at least one solid material (7, 10) providing coupling thereof with the underground formation, this material being in contact with the two slabs (2, 3) over at least part of each of the respective faces thereof, and
- sequentially controlling the various vibrators (V1,..., Vn) by means of a control box (10) with time lags between the respective triggering times that depend on the intervals between the locations of the vibrators and the velocity of propagation of the waves in the formations surrounding the well, so as to obtain a directive emission.

19. A method as claimed in claim 18, **characterized in that** sequential control of the vibrators comprises applying to the vibrators control signals at a fixed frequency f whose phase $\Phi_i$ is related to said frequency f and to said time lag by the relation $\Phi_i = 2\pi.f.ti$.

20. A method as claimed in claim 18, **characterized in that** sequential control of the vibrators comprises applying to the various vibrators control signals of distinct fixed frequencies so as to allow separation thereof.

21. A method as claimed in any one of claims 18 to 20, **characterized in that** it comprises coupling a seismic receiver (R) with the formation surrounding the well and prior determination of the traveltimes of the waves respectively between each vibrator and said receiver (R).

22. A method as claimed in any one of claims 18 to 20, **characterized in that** it comprises adding to the vibrators receivers (R, G1) connected to a signal acquisition and processing unit (15) and sequential triggering of the various vibrators with time lags between the respective triggering times calculated by said unit (15) by calculating the time lag between the signals produced by the various receivers.

**Patentansprüche**

1. Vorrichtung zur Emission von Wellen in einer unterirdischen Formation, welche aufweist: mindestens einen Vibrator, der zwei Endplatten (2. 3) umfasst und in einem Schacht oder Hohlraum (W) positioniert ist, mindestens ein Antriebselement (1), das dafür eingerichtet ist, Schwingungen zu erzeugen und sie auf diese Endplatten zu übertragen, einen Generator (6) zum Zuführen periodischer Steuersignale zu dem Antriebselement und mindestens ein festes Material (7, 10), **dadurch gekennzeichnet, dass** der Vibrator in das feste Material (7, 10) eingebettet ist, welches seine Kopplung mit der unterirdischen Formation sicherstellt, wobei sich dieses Material mit den zwei Endplatten (2, 3) auf mindestens einem Teil jeder ihrer jeweiligen Seiten in Kontakt befindet.

2. Vorrichtung nach Anspruch 1, **dadurch gekennzeichnet, dass** sie Verankerungsstangen (9) aufweist, die mit mindestens einer Endplatte (2. 3) verbunden sind, um die Kopplung des Vibrators mit der Masse (7, 10) des Kopplungsmaterials zu verstärken.

3. Vorrichtung nach Anspruch 1, **dadurch gekennzeichnet, dass** jede Endplatte mindestens zwei Platten (2a, 2b) aufweist. die in einem Abstand voneinander angeordnet sind und durch Verankerungsstangen (9) miteinander verbunden sind.

4. Vorrichtung nach Anspruch 2 oder 3, **dadurch gekennzeichnet, dass** die Außenfläche jeder Endplatte mit Unebenheiten des Reliefs wie etwa Rillen versehen ist, um die Kopplungsfläche der Vorrichtung mit dem Kopplungsmaterial (7, 10) zu vergrößern.

**5.** Vorrichtung nach einem der Ansprüche 2 bis 4, **dadurch gekennzeichnet. dass** die Verankerungsstangen mit Unebenheiten des Reliefs versehen sind, um die Kopplungsfläche der Vorrichtung mit dem Kopplungsmaterial (7, 10) zu vergrößern,

**6.** Vorrichtung nach Anspruch 1 oder 2, **dadurch gekennzeichnet, dass** die Endplatten (2, 3) gelocht sind, um das Eindringen des Kopplungsmaterials in den Raum zwischen den zwei Endplatten (2, 3) zu erleichtern.

**7.** Vorrichtung nach einem der vorhergehenden Ansprüche, **dadurch gekennzeichnet, dass** sie einziges festes Kopplungsmaterial aufweist, welches derart verteilt ist, dass die Kopplung des Vibrators mit der Formation wenigstens an seinen gegenüberliegenden Enden sichergestellt wird.

**8.** Vorrichtung nach Anspruch 7, **dadurch gekennzeichnet, dass** sie mindestens zwei Kopplungsmaterialien aufweist, wobei ein erstes Material (7a, 7b) auf zwei verschiedene Massen verteilt ist, um die Kopplung des Vibrators mit der Formation an seinen gegenüberliegenden Enden sicherzustellen, und ein zweites Material (10) zwischen den zwei Massen angeordnet ist.

**9.** Vorrichtung nach einem der vorhergehenden Ansprüche, **dadurch gekennzeichnet, dass** sie mehrere Vibratoren (V1, ..., Vn) aufweist, die mit einem Signalgenerator (6) verbunden sind, wobei diese Vibratoren in Abständen voneinander entlang eines Schachtes (W) angeordnet sind und alle in mindestens ein Kopplungsmaterial (7, 10) eingebettet sind.

**10.** Vorrichtung nach Anspruch 9, **dadurch gekennzeichnet, dass** sie ein Steuergehäuse (14) aufweist, das zwischen den Vibratoren (V1, ..., Vn) und dem Signalgenerator (6) angeordnet ist und ermöglicht, sie nacheinander auszulösen.

**11.** Vorrichtung nach Anspruch 9 oder 10, **dadurch gekennzeichnet, dass** sie einen seismischen Empfänger (R) aufweist, der mit den Formationen, die den Schacht umgeben, in einer bestimmten Tiefe gekoppelt ist und mit einem Erfassungs- und Verarbeitungsblock (15) verbunden ist, der dafür eingerichtet ist, die Vibratoren der Reihe nach anzusteuern, um eine Emission zu erzielen, die hauptsächlich gemäß einem definierten Diagramm ausgerichtet ist.

**12.** Vorrichtung nach Anspruch 9 oder 10, **dadurch gekennzeichnet, dass** sie seismische Empfänger (G1) aufweist, die den verschiedenen Vibratoren (V1) zugeordnet sind und mit einem Erfassungs- und Verarbeitungsblock (15) verbunden sind, der dafür eingerichtet ist, die Laufzeiten der Wellen zwischen den Positionen der verschiedenen Vibratoren zu bestimmen und sie der Reihe nach anzusteuern, um eine Emission zu erzielen, die hauptsächlich gemäß einem definierten Diagramm ausgerichtet ist.

**13.** Vorrichtung nach Anspruch 2 und 12, **dadurch gekennzeichnet, dass** die Empfänger (G1) an Trägern (16) befestigt sind, die mit den Verankerungsstangen (9) fest verbunden sind.

**14.** Vorrichtung nach einem der vorhergehenden Ansprüche, **dadurch gekennzeichnet, dass** jeder Vibrator eine Säule (1) von Sensorelementen aufweist, die von einer Schutzhülle (4) ummantelt ist, wobei sich das Kopplungsmaterial mit der Schutzhülle (4) und mit den zwei Endplatten (2, 3) auf mindestens einem Teil jeder ihrer jeweiligen Seiten in Kontakt befindet.

**15.** Vorrichtung nach Anspruch 14, **dadurch gekennzeichnet, dass** der Raum zwischen der Hülle und der Säule von Sensorelementen mit einer Flüssigkeit wie etwa Öl gefüllt ist.

**16.** Vorrichtung nach Anspruch 14, **dadurch gekennzeichnet, dass** die Säule (1) aus piezoelektrischen oder magnetostriktiven Sensorelementen besteht.

**17.** Vorrichtung nach einem der Ansprüche 1 bis 13, **dadurch gekennzeichnet, dass** jedes Antriebselement vom elektromechanischen, elektromagnetischen oder hydraulischen Typ ist.

**18.** Verfahren zum Erzeugen der Schwingungssignale in einer unterirdischen Formation gemäß einem orientierten Sendediagramm, **dadurch gekennzeichnet, dass** es umfasst:

- die Anbringung mehrerer Vibratoren (V1, .... Vn) in ein und demselben Schacht (W), die jeweils zwei Endplatten (2, 3), mindestens ein Antriebselement (1), das dafür eingerichtet ist, Schwingungen zu erzeugen und sie auf diese Endplatten zu übertragen, und einen Generator (6) zum Zuführen periodischer Steuersignale zu dem Antriebselement umfassen, wobei jeder Vibrator in einem Schacht oder Hohlraum (W) positioniert ist und in mindestens ein festes Material (7, 10) eingebettet ist, das seine Kopplung mit der unterirdischen Formation sicherstellt, wobei sich dieses Material mit den zwei Endplatten (2, 3) auf mindestens einem Teil jeder ihrer jeweiligen Seiten in Kontakt befindet; und
- das sequentielle Ansteuern der verschiedenen Vibratoren (V1...., Vn) über ein Steuergehäuse (10) mit Verschiebungen zwischen den jeweiligen Zeitpunkten der Auslösung, welche von den Abständen zwischen den Positionen der Vibratoren und von der Ausbreitungsgeschwindigkeit der Wellen in den Formationen, die den Schacht umgeben, abhängen, so dass eine gerichtete Emission erhalten wird.

**19.** Verfahren nach Anspruch 18, **dadurch gekennzeichnet, dass** das sequentielle Ansteuern der Vibratoren das Anlegen von Steuersignalen mit fester Frequenz f an die Vibratoren umfasst, deren Phase $\Phi_i$ mit der Frequenz f und mit der besagten zeitlichen Verschiebung durch die Beziehung $\Phi_i = 2\pi.f.t_i$ verknüpft ist

**20.** Verfahren nach Anspruch 18, **dadurch gekennzeichnet, dass** das sequentielle Ansteuern der Vibratoren das Anlegen von Steuersignalen mit festen Frequenzen, die voneinander verschieden sind, an die verschiedenen Vibratoren umfasst, um ihre Trennung zu ermöglichen.

**21.** Verfahren nach einem der Ansprüche 18 bis 20, **dadurch gekennzeichnet, dass** es die Kopplung eines seismischen Empfängers (R) mit der den Schacht umgebenden Formation und die vorherige Bestimmung der Durchlaufzeiten der Wellen jeweils zwischen jedem Vibrator und dem Empfänger (R) umfasst.

**22.** Verfahren nach einem der Ansprüche 18 bis 20, **dadurch gekennzeichnet, dass** es die Zuordnung von Empfängern (R, G1), die mit einem Signalerfassungs- und -verarbeitungsblock (15) verbunden sind, zu den Vibratoren und die sequentielle Auslösung der verschiedenen Vibratoren mit Verschiebungen zwischen den jeweiligen Auslösezeitpunkten, die von dem besagten Block (15) berechnet werden, indem die Verschiebung zwischen den von den verschiedenen Empfängern erzeugten Signalen berechnet wird, umfasst.

FIG.1

FIG.1A

**FIG.2B**　　　**FIG.2C**　　　**FIG.2A**

**FIG.4**　　　　　　　　**FIG.5**

# FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5360951 A
- EP O748457 A
- EP 0748457 A
- WO 0250572 A
- EP 1173781 A